Europäisches Patentamt

European Patent Office

Office européen des brevets

(11) Publication number : **0 471 640 A1**

# (12) EUROPEAN PATENT APPLICATION

(21) Application number : **91500099.6**

(51) Int. Cl.⁵ : **B62M 1/04**

(22) Date of filing : **14.08.91**

(30) Priority : **14.08.90 ES 9002194**

(43) Date of publication of application :
**19.02.92 Bulletin 92/08**

(84) Designated Contracting States :
**AT BE CH DE DK FR GB GR IT LI LU NL SE**

(71) Applicant : **Moresco Suarez, Javier**
**c/Abeto, 3 Vistahermosa**
**E-11500 Puerto de Santamaria, Cadiz (ES)**

(72) Inventor : **Moresco Suarez, Javier**
**c/Abeto, 3 Vistahermosa**
**E-11500 Puerto de Santamaria, Cadiz (ES)**

(74) Representative : **Gomez-Acebo y Pombo, José Miguel**
**c/o CLARKE, MODET & Co. Paseo de la Castellana 164**
**E-28046 Madrid (ES)**

(54) **Mechanism to operate bicycles and similar vehicles.**

(57) A driving mechanism for bicycles and similar vehicles which consists of two levers (4,4a) located in planes parallel to the bicycle's frame (1) and on either side of it. The levers are mounted on two fulcrum pins (5) perpendicular to the mentioned planes. The leverage arm (6,6a) of these levers defines the footrest. The other arm (7,7a) ends in a curved link (9,9a) concentric to the fulcrum pin (5) of the levers (4,4a) and cross-toothed (10,10a) on the concave edge of the link to provide a rack. The curved rack of the two levers (4,4a) is meshed on the same number of ratchet pinions (11) which are mounted on the rearwhell spindle (3).

EP 0 471 640 A1

FIG.1

This invention provides a mechanism to operate bicycles and similar vehicles but it can be also applied to operate four wheeled vehicles, vehicles for the handicapped, etc.

The mechanism used traditionally to operate bicycles and similar vehicles is based on a driving chain which meshes in a driving toothed wheel, which is known as sprocket or disc. This sprocket is solid to the actuating foot pedals. A driven pinion, which is solid to the spindle of the rear wheel, is also part of the mechanism. The spindle of the rear wheel can be solid to pinions of different diameters and number of teeth to achieve different ratios of transmission between the sprocket and the rear driven wheel. The driving chain can selectively actuate through a manually operated gearshift, one of the pinions which are solid to the wheel spindle.

This operating mechanism leads to a remarkable increase of the final cost of the bicycle or vehicle due to the number of components and special characteristics of same.

On the other hand, when the effort applied by the rider or riders is compared to the movement or result achieved, there is a loss in efficiency due to the driving chain.

The subject invention is intended to develop a driving mechanism of a simpler design than the traditional pinions and chain mechanisms used in bicycles and similar vehicles, which not only lowers the costs bur achieves, besides, higher performances.

The mechanism of this invention consists of two equal length levers which are located in planes parallel to that of the bicycle frame, and the two levers being located on either side of the said frame. The two levers are mounted on fulcrum pins fitted to the two arms of the rear fork. These fulcrum pins are perpendicular to the mentioned planes. Each of these fulcrum pins divide each lever in two arms; one is the leverage arm 5, on which the rider's foot, on the same side of the lever, is rested, and a resisting arm which is furcated in two symmetrical branches; these branches enclose an acute angle and are joined, in the ends, by a curved link, which is concentric to the fulcrum pin of the levers. This curved link is toothed cross-wise in the concave edge and provides a curved rack. The racks of this shape in both levers are telescopically meshed to as many ratchet pinions fitted to the rear wheel spindle, one on either end of same. These pinions are able to freewheel in one direction of rotation of the wheel spindle. This direction of rotation is opposite to that of the wheel and spindle, when going forward, while, in the opposite direction, the pinions drive or pull the spindle as they rotate, and, in this sense, they are similar to the traditional ratchet pinions.

The two levers which make up the mechanism of this invention swing, on the fulcrum pins, between two limiting positions, which match the end position of the curved links stroke on the respective pinions. The angles of the two levers are also staggered to each other, in a length which is equal to the end positions of their swing movement. In this way, when the leverage arm of one of the levers is in the lowest position, the leverage arm of the other lever is in the uppermost position.

When the leverage arm of one of the levers is pushed downwards, the leverage arm of the other lever will move upwards.

The movement of the leverage arm of any lever, in a downward direction produces the driving movement. During this movement, the curved racks act positively on the pinion of the rear wheel spindle to which they are meshed while, during the upward movement of the leverage arm, the pinion located in the side of the lever freewheels on the wheel's spindle.

For an easier return movement, the levers are related to each other, preferably, through the leverage arms, by a cable or cord which is attached at both ends to one of the levers and runs over a direction shifting pulley which is mounted in the bicycle's frame and on a centerline perpendicular to the fulcrum pins of the levers and in the same plane of the frame.

As can be seen, the leverage arm of each lever provides a support where the foot of the bicycle or vehicle rider is applied. Subject to the foot position, along that arm, the distance from the point where the foot force is applied to the fulcrum pin of the lever will be changed and this, in turn, varies the actual length of the leverage arm and, thus, the power which is transmitted.

In this way, the mechanism of this invention allows for adjustment of the power which is transmitted to the rear wheel spindle. It will be sufficient for adjustment to change the position of the foot on the leverage arm of the levers.

For easier positioning of the foot, the leverage arm of each lever can be fitted with a footrest piece, which serves as a foot pedal. The position of that piece can be adjusted along the leverage arm and can be designed also to swing about a shaft parallel to the lever's fulcrum point. This will allow for easy adjustment of the foot angle, as the leverage arms of the levers are shifted.

It should be mentioned herein that this mechanism leads to a considerable reduction of the effort required when compared to the traditional bicycle since, on the one hand, the driven pinions can be smaller while, at the same time, the effort can be reduced since the leverage arm, which transmits it, can be adjusted to the proper matching of dimensions between pinion, leverage arm, etc. and these benefits can be easily achieved when compared to the traditional bicycle. And the effect which is sought at each time, whether less effort or more speed, can be always achieved through the required matching of dimensions.

The possibility of fitting a foot pedal, at the end of the levers, has to be underlined as the most simplified example for possible application of this mechanism. Although, the possibility of changing the leverage arm is not available, it still offers enormous benefits, especially, as regards economy, while the advantage of moving small pinions, which increases considerably the performance, when compared to that of the traditional bicycle, is not lost.

The impact of the levers, as they reach the end of the stroke will be dampened by a rubber stop which is located on each arm of the fork and close to the fulcrum pins of the levers.

The mechanism of this invention is described next in more detail and the description is referenced to the attached drawings which show an example of a design, but not limited to it, to allow the design and benefits of the mechanism of this invention being better understood.

In the drawings:

Figure 1 shows a side elevation of a bicycle fitted with the actuating mechanism subject of this invention.

Figure 2 shows a partial, side elevation of one of the levers of the actuating mechanism.

Figure 3 shows a cross section sketch of the actuating mechanism of this invention.

Figure 4 shows a view similar to that of figure 1 in which the levers are fitted with foot pedals in the ends.

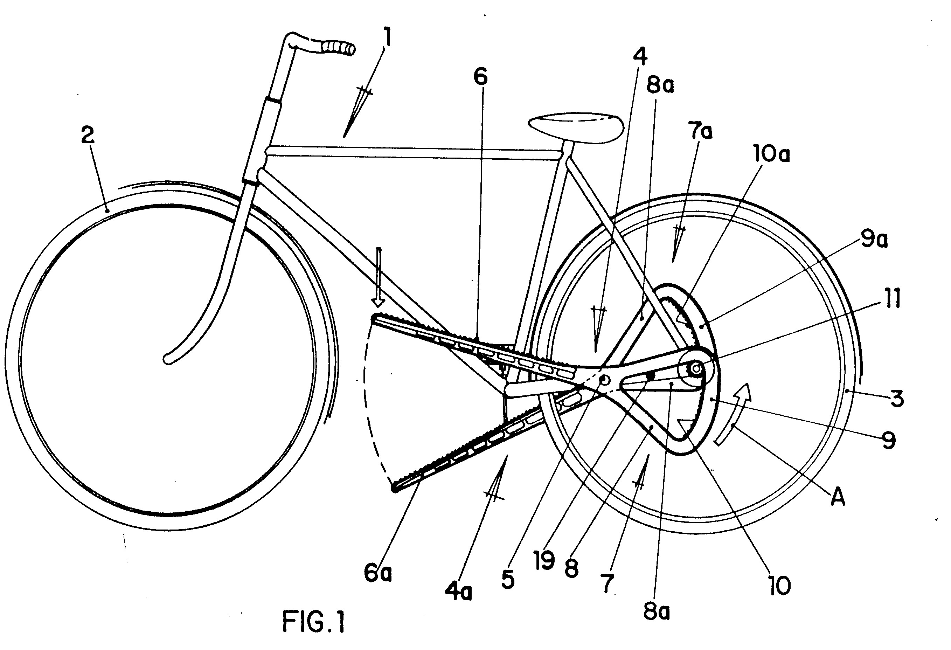

In figure 1, a traditional bicycle can be seen which consists of a frame 1, a frontwheel 2, and a rearwheel 3.

The frame construction and mounting of the wheels, are the usual in a traditional design.

The driving mechanism of the bicycle, according to this invention, consists of two equal length levers, of reference numbers 4 and 4a, which are fitted on either side of frame 1 and located in planes parallel to that frame. These two levers are joined to the bicycle frame through two fulcrum pins 5 perpendicular to that frame.

Each of these fulcrum pins 5 divides each lever in a leverage arm 6-6a and a resisting arm 7-7a. The resisting arm 7a is furcated in two symmetrical branches which are referenced with number 8, in the lever 4, and with number 8a, in the lever 4a. The ends of each of the two branches in each lever are joined by a curved link 9-9a, which is cross-toothed inside 10-10a to provide a curved rack for each lever.

The wheel spindle 3 carries, on either side of the wheel, a pinion 11 with a ratchet which is meshed to the adjacent rack 10 or 10a. This pinion with ratchet 11 drives the wheel spindle 3, when that pinion rotates in the forward direction of the wheel, while, otherwise, both components are able to freewheel, in a way similar to that of the traditional ratchet pinions.

In the formerly described design, the force to roll forward the wheel 3 is transmitted through pinion 11 only when the rack 10 or 10a is moved in an upward direction as shown by the arrow A. Otherwise, the pinion 11 freewheels in respect of the bicycle spindle when the rack 10 or 10a moves downwards in a direction opposite to that of the arrow A. The upward movement of the rack 10 or 10a is achieved when the respective leverage arm 6 or 6a is moved downwards due to the force applied by the rider's feet which rest on the surface of the leverage arms.

As the position of the rider's feet on the leverage arm 6-6a of the levers is varied, the distance to the fulcrum pin 5 will change and this will also change the effective length of the leverage arm. Therefore, more or less power can be transmitted to the wheel spindle 11 for the same effort depending on the position of each foot which is the point where the force is applied.

The gears shift, in the traditional bicycles, is based on pinions of different diameters and number of teeth which allowed to change the ratio between the sprocket and the pinion which is at that moment driving the rearwheel spindle.

The mechanism of this invention achieves the same effect just by changing the position of the foot in the leverage arm 6-6a of the levers.

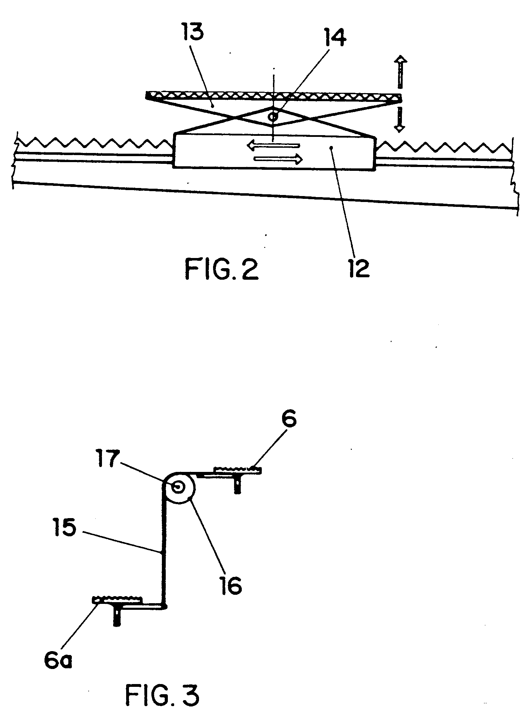

For easier shifting of the foot position, the leverage arms of the levers can be fitted with a footrest element 12, figure 2. The position of this element can be shifted easily for adjustment along the mentioned leverage arm. In addition to this footrest 12, a foot pedal 13 can be fitted to swing on a fulcrum pin 14 parallel to the fulcrum pin 5 of the levers. The footrest angle can be easily changed by the foot pedal 13, at the same time the leverage arm of the levers is shifted.

The levers 4 and 4a will be preferably related through a cable 15 which is preferably attached by its ends to the leverage arm 6-6a of the mentioned levers and runs over the direction shifting pulley 16 which is mounted on the bicycle's frame and can freewheel on the shaft 17 perpendicular to the fulcrum pins 5 of the levers. The synchronized movement between those levers is achieved when this linking of the two levers are linked by the cable 15. In this way, when the rack 10 is meshed to the respective pinion 11 in the uppermost position, the rack 10a is meshed but in the lowest one and, therefore, the leverage arm 6 is in the uppermost position while the leverage arm 6a is in the lowest one to hold this staggering angle and the alternated swing around the fulcrum pin 5.

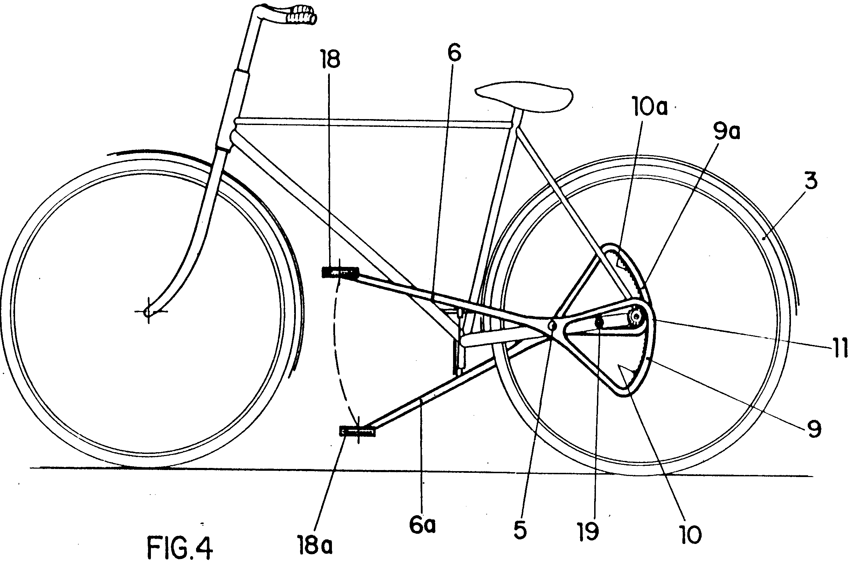

In the design of figure 4, where the same reference numbers are used to identify the same elements or components, the levers 6-6a are fitted with foot pedals 18-18a on the ends. These foot pedals allow for positioning of the foot and to drive the smaller pinions but achieving higher efficiency. A rubber stop 19 is fitted to each of the levers 6-6a, in the resisting arm, close to the fulcrum pin. This stop acts as a shock-absorber of the impacts which the lever may produce when they reach the end of the stroke or alternative movement of same.

The actuating mechanism described herein can be applied in four wheeled vehicles used by two or more riders, and a dual set of levers can be then fitted so that each rider operates one set of levers.

In the same way, the actuating mechanism of this invention can be used to drive chairs or carts for the handicapped.


**Claims**

**1.-** A driving mechanism for bicycles and similar vehicles which is characterized by a two levers design located on parallel planes to the bicycle's frame and in either side of same. These levers are mounted on two fulcrum pins perpendicular to the already mentioned planes and divide the lever in two arms, one straight leverage arm, on which the rider's foot, located on that side of the lever, is applied, and a resisting arm which is furcated in two symmetrical branches which enclose a certain angle and are joined in the ends by a curved link concentric to the fulcrum pin of the levers. The concave edge of the link is cross-toothed and provides a curved rack. The curved rack of each of the two levers is meshed to the same number of ratchet pinions, mounted on the rearwheel spindle, one at either side. The pinions are able to freewheel when the wheel spindle rotates in a direction which is opposite to that of the wheel and spindle during the forward movement while, in the opposite direction, they drive or pull the spindle as they rotate. The two levers swing on the fulcrum pins between two limit positions which are the end positions of the curved racks meshed to the respective pinions. The two levers are staggered in an angle as large as the one between the end positions of their swing.

**2.-** A mechanism, as described in claim 1, characterized by the two levers being related to each other, preferably by the leverage arms, through a cable or cord which is attached, in both ends, to one of the levers and runs on a direction shifting pulley which can freewheel and mounted in the bicycle's frame on a shaft perpendicular to the fulcrum pins of the two levers.

**3.-** A mechanism, as described in claim 1, which is characterized by the leverage arm of each lever being fitted with a piece which defines the footrest. The position of this piece can be adjusted along the leverage arm and swings on a shaft parallel to the fulcrum pins of the levers.

FIG.1

EP 0 471 640 A1

FIG.2

FIG. 3

FIG.4

EP 0 471 640 A1

**European Patent Office**

# EUROPEAN SEARCH REPORT

Application Number

EP    91 50 0099

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | AU-B-86 017 (RUYS)<br>* page 3, line 13 - page 5, line 5; figures 1-6 *<br><br>* page 5, line 6 - line 13 * | 1<br><br>3 | B62M1/04 |
| Y | | 2 | |
| Y | US-A-3 984 129 (HEGE)<br>* column 11, line 60 - column 12, line 28; figure 10 * | 2 | |
| A | FR-A-719 442 (BITSCHINE ET BITSCH)<br>* the whole document * | 1 | |
| | | | **TECHNICAL FIELDS SEARCHED (Int. Cl.5 )**<br><br>B62M |

The present search report has been drawn up for all claims

| Place of search | Date of completion of the search | Examiner |
|---|---|---|
| THE HAGUE | 07 NOVEMBER 1991 | DENICOLAI G. |